# FASCICULE DE BREVET EUROPEEN

(11) **EP 0 898 519 B1**
(45) Date de publication et mention de la délivrance du brevet: **17.12.2003**
(21) Numéro de dépôt: 96933469.7
(22) Date de dépôt: 01.10.1996
(51) Int. Cl.: B60L 11/18

(54) **VEHICULE ELECTRO-HYDRAULIQUE A RECUPERATION D'ENERGIE**
ELEKTROHYDRAULISCHES FAHRZEUG MIT ENERGIERÜCKGEWINNUNG
ELECTRO-HYDRAULIC VEHICLE WITH ENERGY REGENERATION

(43) Date de publication de la demande: 03.03.1999
(73) Titulaire: TOUCHTUNES MUSIC CORPORATION, Las Vegas, NV 89104 (US)
(72) Inventeur: NATHAN, Guy, F-91330 Yerres (FR); BERNEUIL, Paul, F-75014 Paris (FR)
(74) Mandataire: Debay, Yves
(86) Numéro de dépôt international: FR9601531
(87) Numéro de publication internationale: WO98014344

(56) Documents cités:
- DE-A- 2 515 694
- DE-A- 4 226 453
- DE-A- 4 325 703
- FR-A- 2 709 453
- FR-A- 2 732 652
- US-A- 5 230 402
- PATENT ABSTRACTS OF JAPAN vol. 18, no. 220 (M-1595) 20 Avril 1994 & JP 06 016 051 A (NIPPON SOKEN INC) 25 Janvier 1994

## Description

La présente invention concerne un véhicule électro-hydraulique à récupération d'énergie.

Il est connu dans l'art antérieur des véhicules à traction électrique dans lequel la vitesse variable du véhicule est obtenue en associant au moteur électrique un variateur qui va, à partir d'une tension continue ou alternative, générer les signaux nécessaires à la commande d'un moteur électrique continu ou alternatif pour obtenir des vitesses variables de rotation de ce moteur. Dans ce dispositif, il est bien connu que le rendement optimum est obtenu à la vitesse de rotation nominale de ce moteur et que ce qui, pour d'autres vitesses de rotation entraîne un rendement inférieur à cet optimum. De même, dans les véhicules à transmission hydrostatique en boucle dite fermée, on constate dans l'art antérieur que les moteurs généralement utilisés sont du type à cylindrée fixe entraînant ainsi une incompatibilité entre la plage de débit nécessaire (possible) et la plage de pression pour laquelle ils ont été conçus et leur interdisant la possibilité d'obtenir des grandes vitesses de déplacement du véhicule tout en étant suffisamment dimensionnés pour fournir les couples maximums nécessaires au démarrage ou à des franchissements de pente importante.

Un premier but de l'invention est donc de proposer un véhicule à traction électro-hydraulique qui permette en effet d'optimiser les conditions de fonctionnement du moteur électrique alimenté par un accumulateur, et d'autre part, d'obtenir aussi bien des couples de démarrage importants lorsque cela est nécessaire que des vitesses suffisantes pour obtenir un déplacement rapide du véhicule sans avoir à surdimensionner les éléments hydrauliques.

FR A 2 709 453 enseigne un véhicule comportant un accumulateur d'alimentation d'un moteur électrique fonctionnant à vitesse nominale en phase motrice pour entraîner à vitesse constante une pompe hydraulique à cylindrée variable reliée par des canalisations à au moins un moteur hydraulique à cylindrée variable contrôlée et commandée hydrauliquement dans une plage limitée, le moteur entraînant indirectement une ou plusieurs roues du véhicule.

Ce but est atteint dans une première variante par le fait que le véhicule comporte un accumulateur alimentant un moteur électrique fonctionnant dans les phases motrices du véhicule à sa vitesse nominale pour entraîner à vitesse constante une pompe hydraulique à cylindrée variable commandée et gérée électroniquement par un circuit de contrôle, de gestion et de commande de l'inclinaison du plateau de commande de la cylindrée variable de la pompe hydraulique à pistons axiaux, qui est reliée en circuit fermé par des canalisations à au moins un moteur hydraulique à cylindrée variable, dont la cylindrée est contrôlée et commandée hydrauliquement dans une plage limitée par la cylindrée maximale et une cylindrée minimale non nulle, le dit moteur hydraulique entraînant indirectement une ou plusieurs roues du véhicule.

Ce but est atteint dans une deuxième variante par le fait que le véhicule comporte un accumulateur (61) alimentant un moteur électrique (60), le dit moteur électrique fonctionne dans les phases motrices du véhicule à sa vitesse nominale pour entraîner à vitesse constante une pompe hydraulique à cylindrée variable (4) commandée et gérée électroniquement par un circuit de contrôle, de gestion et de commande (9) de l'inclinaison du plateau de commande de la cylindrée variable de la pompe hydraulique(4), qui est reliée en circuit fermé par des canalisations à un ensemble à cylindrée variable de moteurs hydrauliques (31 à 34) ayant chacun une cylindrée fixe, dont la cylindrée de l'ensemble est modifiée hydrauliquement par des vannes (88, 85) dans une plage limitée par la cylindrée maximale de tous les moteurs (31 à 34) de cylindrée fixe et une cylindrée minimale non nulle, chacun desdits moteur hydraulique (31 à 34) étant relié à une roue du véhicule (11 à 14) par l'intermédiaire d'un moyen de désaccouplement (21 à 24) permettant le désaccouplement des roues en fonction de la variation de cylindrée de l'ensemble.

Un autre but de l'invention est de proposer un circuit de commande d'un tel véhicule de façon que les actions effectuées par le conducteur soient en permanence contrôlées et régulées par le circuit de commande pour optimiser les conditions de fonctionnement et de récupération d'énergie du véhicule.

Ce but est atteint par le fait que le circuit de contrôle et de commande de l'inclinaison du plateau de commande de la cylindrée variable de la pompe, reçoit d'une part une information représentative de la pression du fluide entre la pompe et le moteur hydraulique et d'autre part, une information représentative soit du courant débité par l'accumulateur à destination du moteur électrique pendant les phases motrices soit du courant généré par le moteur électrique pendant les phases de freinage ou de ralentissement et exploite ces informations pour corriger le signal de commande de l'angle du plateau en fonction de valeurs limites de référence.

Selon une autre particularité, les valeurs limites de référence fixées par le circuit de contrôle , de gestion et de commande de l'inclinaison du plateau permettent de recharger l'accumulateur pendant les phases de freinage ou de ralentissement du véhicule.

Selon une autre particularité, le circuit de gestion de la tension de commande du plateau déterminant la variation de cylindrée de la pompe reçoit un signal représentatif de l'enfoncement de la pédale d'accélérateur, un signal représentatif d'un interrupteur indiquant le déplacement en avant ou en arrière de la commande de déplacement avant/arrière du véhicule, un signal représentatif de l'actionnement de la pédale de frein et un signal généré par un premier circuit et représentatif de la validation de la marche avant/arrière du véhicule et un signal généré par un second circuit représentatif du maintien de la tension de commande pour le circuit de gestion pour limiter la variation de la tension de commande.

Selon une autre particularité constituée par la sortie d'un circuit logique « OU » à trois entrées, dont une entrée reçoit un signal représentant l'état de charge de la batterie ;
une autre entrée reçoit un signal représentatif du courant débité ou reçu par l'accumulateur ;
la troisième entrée reçoit un signal représentatif de la pression du fluide entre la pompe et le moteur par rapport à une pression de référence maximale.

Selon une autre particularité, le signal de pression est délivré par la sortie d'un comparateur recevant sur une de ses entrées le signal du capteur de pression provenant du circuit entre la pompe et le moteur hydraulique, et d'autre part une tension de référence représentative de la pression maximale.

Selon une autre particularité, le circuit générant le signal représentatif du courant de charge généré par le moteur électrique vers l'accumulateur ou du courant débité par l'accumulateur dans le moteur électrique est constitué d'un comparateur recevant sur une de ses entrées le signal de sortie d'un amplificateur de la valeur absolue du courant mesuré par un capteur de boucles de courant, et sur sa seconde entrée un signal représentatif d'un courant de référence I₀, I₁, I₂ qui dépendra d'une détection de polarité d'une part, et d'autre part d'une détection de la mise en oeuvre des freins.

Selon une autre particularité, la détection de polarité est effectuée par un circuit détecteur de polarité qui actionne lors de la détection d'une inversion du sens du courant signalant une charge de l'accumulateur, la commutation d'un interrupteur permettant de commuter la tension d'alimentation du circuit électronique d'une première position alimentant un premier élément générant un premier signal représentatif d'un premier courant maximal I₀ admissible par le moteur électrique, vers une seconde position alimentant un second élément générant un deuxième signal représentatif d'un second courant I₁ correspondant à un courant de ralentissement du véhicule.

Selon une autre particularité, l'interrupteur de détection de l'actionnement des freins commande l'inverseur de commutation de la tension d'alimentation du circuit électonique sur un troisième circuit délivrant une tension représentative d'un courant I₂ fixe ou variable de freinage du véhicule.

Selon une autre particularité, le moteur électrique est à courant continu et excitation parallèle.

Selon une autre particularité, le moteur électrique est à courant alternatif de type synchrone ou asynchrone et le circuit d'alimentation électrique provenant de l'accumulateur comprend un onduleur.

D'autres particularités et avantages de la présente invention apparaîtront plus clairement à la lecture de la description ci-après faite en référence aux dessins annexés, dans lesquels :
la figure 1A représente une vue schématique du dispositif d'entraînement électro-hydraulique du véhicule selon une première variante;
la figure 1B représente une deuxième variante du dispositif d'entraînement du véhicule électro-hydraulique;
la figure 1C représente une troisième variante du dispositif d'entraînement du véhicule électro-hydraulique;
la figure 2 représente un schéma du circuit de commande du plateau de variation de la cylindrée de la pompe pour le véhicule électro-hydraulique selon une des figures 1A, 1B ou 1C.

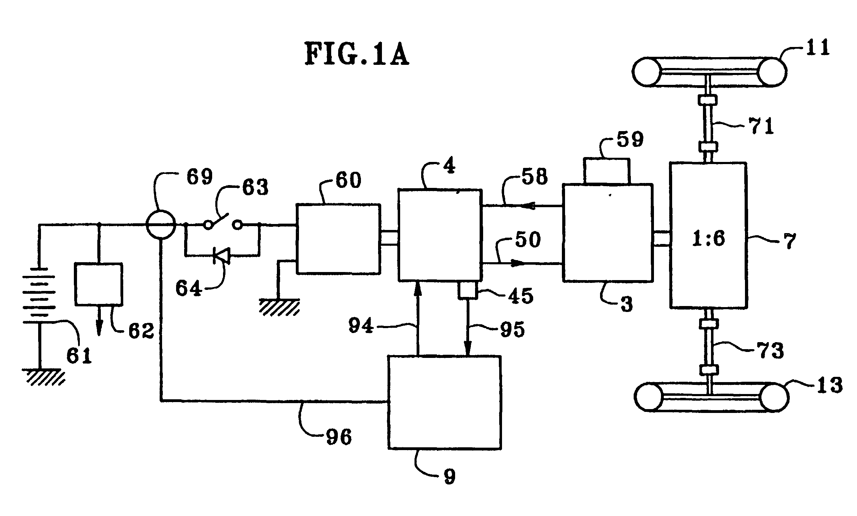

Le véhicule est constitué, dans une première variante représentée à la figure 1A, d'un accumulateur (61) qui alimente en courant continu par un interrupteur (63) et une ligne (65) un moteur électrique (60). Dans la variante représentée le moteur électrique (60) est à courant continu et excitation parallèle. Dans d'autres modes de réalisation de l'invention le moteur électrique peut être du type moteur alternatif synchrone ou asynchrone et dans ce cas il suffit d'ajouter au circuit électrique un onduleur L'éventuel onduleur et le moteur électrique sont calculés pour permettre un fonctionnement du moteur électrique à vitesse nominale pratiquement constante qui sera de l'ordre de 3.000 tours/minute. Ce moteur (60) entraîne par son arbre de sortie une pompe hydraulique (4) à cylindrée variable. Cette pompe hydraulique (4) est reliée par une canalisation d'alimentation ou de refoulement (50) et une canalisation de retour ou d'aspiration (58) à un moteur hydraulique (3) à cylindrée variable. Ce moteur hydraulique (3) à cylindrée variable est en fait une pompe utilisée en moteur et dont la commande mécanique ou électronique de gestion de l'inclinaison du plateau a été remplacée par un circuit hydraulique (59) qui constitue une unité hydraulique de commande angulaire de l'inclinaison du plateau du moteur hydraulique à partir des pressions de fluide prélevées sur les sorties d'aspiration et de refoulement du moteur hydraulique pour actionner mécaniquement l'inclinaison du plateau du moteur hydraulique dans une plage angulaire limitée par la valeur maximale possible et un valeur inférieure non nulle déterminée par les performances souhaitées pour la transmission. Les pompes utilisées en pompe (4) ou en moteur hydraulique (3) sont du type à piston axiaux telles que par exemple celles commercialisées par la firme « Danfoss » sous la référence HTP 25, 40 et 63 en fonction de la cylindrée choisie pour la puissance nécessaire.

Le moteur (3) entraîne par son arbre de sortie un réducteur (7) constituant également un différentiel dont les deux arbres de sortie entraînent par des cardans (71, 73) les roues associées (11, respectivement 13). Le réducteur est relié par une liaison mécanique ou autre à la manette de commande de marche avant ou arrière ou de point mort , pour lors de la mise en position point mort provoquer dans le réducteur le désaccouplement permettant la mise en roue libre des roues. Par ailleurs selon la position de la manette correspondant à la marche avant ou à la marche arrière, le plateau de la pompe (4) aura un angle d'inclinaison opposé par rapport à la position neutre correspondant à l'angle nul.

Un circuit de commande (9) reçoit par une liaison (95) un signal provenant d'un capteur de pression (45) monté sur la pompe (4) et représentatif de la pression existant dans la canalisation (50) d'alimentation du moteur hydraulique (3). Ce même circuit de commande (9) délivre par sa sortie (94) un signal pour l'actionneur (incorporé de façon classique dans la pompe) de commande de l'angle du plateau de variation de la cylindrée de la pompe (4). Ce circuit (9) reçoit par la liaison (96) une information, délivrée par un capteur de courant (69), représentative du courant électrique circulant entre l'accumulateur (61) et le moteur (60), que ce soit en courant d'alimentation du moteur ou en courant de récupération pour la charge de l'accumulateur lorsque le moteur électrique (60) fonctionne en générateur. Dans ce dernier cas, l'interrupteur (63) du circuit reliant l'accumulateur au moteur électrique (60) sera ouvert et le courant de récupération circulera à travers la diode (64) du circuit électrique, montée en inverse et en parallèle sur l'interrupteur (63).

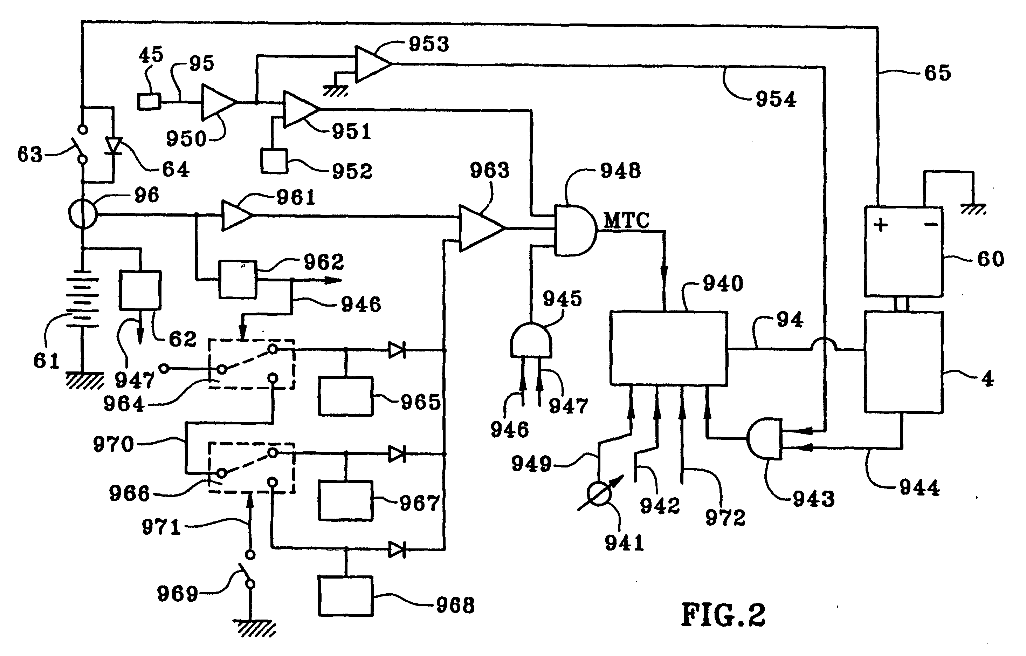

Le circuit de commande (9), représenté schématiquement et plus en détail sur la figure 2, est constitué d'un circuit électronique (940) de gestion de la tension de commande du plateau de variation de cylindrée de la pompe (4). Ce circuit électronique (940) délivre, par une sortie (94), une tension permettant de commander l'inclinaison du plateau de façon à déterminer la cylindrée de la pompe (4). Cette commande varie en fonction d'un signal représentatif de la position de l'accélérateur du véhicule qui est reçu sur une entrée (949) du circuit (940). Ce signal est fourni par un potentiomètre (941) couplé à la pédale d'accélération et la tension fournie par ce potentiomètre sur l'entrée (949) est proportionnelle à l'enfoncement de l'accélérateur. En fonction de ce signal, le circuit électronique (940) de gestion de la tension de commande va délivrer sur sa sortie (94) une tension qui devrait varier selon une rampe proportionnellement à la commande de l'accélérateur, cette rampe ayant une pente positive ou négative en fonction d'une information reçue sur une autre entrée du circuit de gestion (940) et représentant la commande marche avant ou marche arrière délivrée sur une ligne (942) par un interrupteur associé à la manette de commande de la marche avant/marche arrière. La valeur positive ou négative de la rampe de la tension sera également validée par une information délivrée par la sortie d'une porte ET (943) à deux entrées, dont l'une des entrées reçoit un signal (944) représentatif de la rotation de la pompe (4) et une autre entrée reçoit un signal (954) représentatif de la pression nulle ou non nulle du fluide en sortie de la pompe. Ce signal est délivré par la sortie d'un comparateur (953), dont une entrée, par exemple reliée à la masse, reçoit une tension de référence représentative de la valeur 0 et l'autre entrée reçoit la tension de sortie d'un amplificateur (950). L'entrée de l'amplificateur (950) reçoit le signal de sortie (95) d'un capteur de pression (45) branché en sortie de la pompe (4). Le comparateur (953) délivrera un signal de valeur logique « 1 » lorsque la pression sera nulle, c'est-à-dire lorsque l'utilisateur du véhicule pourra effectivement passer de la marche avant en marche arrière.

L'information de freinage (971) délivrée par l'interrupteur (969) est reçue en entrée (972) du circuit (940). Cette information de freinage (971) sera interprétée par le circuit (940) comme étant équivalente à la valeur minimale du potentiomètre d'accélérateur (941) correspondant à une pression nulle sur la pédale d'accélérateur. Cette fonction inhibe l'action de l'accélérateur lorsque le frein est actionné.

La variation de la tension de commande délivrée sur la ligne (94) à la pompe (4), générée par le circuit (940) sera limitée par le circuit décrit ci-après qui délivrera en sortie le signal MTC (Maintien de la Tension de Commande). Ce circuit est constitué d'une porte OU (948) à trois entrées, dont une première entrée reçoit la sortie d'une porte ET (945) à deux entrées. Cette porte ET (945) reçoit sur son entrée (946) une information représentative du signe du courant délivrée par le détecteur de polarité (962) et sur son entrée (947) une tension représentative de l'état de charge de l'accumulateur (61) délivrée par le circuit (62) de contrôle de l'état de charge de la batterie. Lorsque l'état de charge de l'accumulateur est à son maximum et que l'information représentative du signe du courant correspond à une récupération d'énergie, la porte ET (945) délivre un signal logique « 1 » qui va venir, par le biais de la porte OU (948) délivrer un signal MTC au niveau logique « 1 » ; ce qui bloque l'évolution de la valeur de la tension de commande (94) agissant sur la variation de la commande du plateau et supprimer la variation de commande de plateau. La deuxième entrée de la porte OU (948) reçoit la sortie d'un comparateur (951) dont une première entrée reçoit un premier signal représentatif de la pression hydraulique en sortie de la pompe. Ce premier signal est délivré par la sortie de l'amplificateur (950). Ce premier signal est comparé à une tension de référence représentative d'une pression de référence, délivrée par un circuit (952). Là encore, lorsque la pression dans le circuit devient égale à la pression de référence, le comparateur (951) délivre une tension correspondant à la valeur logique « 1 » . La porte OU (948) va générer un signal correspondant à la valeur logique « 1 » qui va bloquer l'évolution de la valeur de la tension de commande agissant sur la variation de la commande (94) du plateau de la pompe (4).

Enfin la troisième entrée du circuit OU est constituée par la sortie d'un troisième comparateur (963) dont une entrée est reliée à la sortie d'un circuit (961) délivrant une tension représentative de la valeur absolue de courant circulant dans la ligne (65) d'alimentation du moteur (60). Cette tension représentative du courant étant prélevée par un capteur (96) à boucle de courant. La sortie de ce capteur (96) est également envoyée sur un circuit (962) détecteur de polarité de la tension représentative du signe du courant. Ce détecteur de polarité commandera le basculement de l'inverseur (964) lorsque la polarité du courant indiquera un courant de récupération délivré par le moteur (60), lors des régimes de ralentissement et lors de l'actionnement de la pédale de frein du véhicule.

L'inverseur (964) bascule entre deux positions pour mettre en relation alternativement une tension d'alimentation, soit avec un circuit (965) permettant de délivrer une tension représentative d'un courant de référence I₀ correspondant au courant maximum admissible par le moteur électrique (60) soit avec un second circuit (970). Dans ce cas l'inverseur (964) bascule sur une ligne intermédiaire (970) qui est reliée à un second inverseur (966) dont le basculement est commandé par un interrupteur (969) couplé à l'actionnement du frein du véhicule. En l'absence de l'actionnement du frein, cet inverseur (966) permet l'alimentation d'un circuit (967) destiné à délivrer sur le comparateur (963) un signal I₁ représentatif d'une référence correspondant à un courant de ralentissement qui est le courant généré par le moteur (60). Lorsque l'actionnement de la pédale de frein est détectée par l'interrupteur (969), celui-ci par fermeture du circuit électrique commande le basculement de l'inverseur (966), lequel fait basculer la transmission de la tension d'alimentation par la ligne (970) sur le circuit (968).Ce circuit (968) permet de délivrer une tension de référence proportionnelle à un courant de référence I₂ fixe ou variable correspondant à un courant prédéterminé de freinage et au courant de charge admissible par l'accumulateur qui peut être généré pendant l'opération de freinage. Dans un mode de réalisation, la valeur variable I₂ est définie par une valeur en relation avec la pression physique exercée par l'utilisateur sur la pédale de frein, de façon à privilégier le freinage par récupération d'énergie par rapport à celui par dissipation thermique obtenu par les plaquettes de freins. Cette valeur peut être obtenue, en disposant, dans le circuit hydraulique de freinage un capteur de pression hydraulique pour délivrer une valeur analogique électrique, soit proportionnelle, soit non proportionnelle non linéaire selon une loi définie et qui correspond à cette référence variable I₂ et pouvant tenir compte de l'état de charge de la batterie (61). Les trois diodes d1, d2, d3 permettent de réaliser une fonction OU analogique des références I₀, I₁, I₂.

En fonctionnement, lorsque la valeur du courant représentée par la sortie de l'amplificateur en valeur absolue (961) correspond à l'une des trois valeurs de référence délivrée par une des trois diodes d1, d2, d3 et fixée en fonction de la position des inverseurs (964, 966), le comparateur (963) délivre à sa sortie un signal de niveau logique « 1 » qui va bloquer l'évolution de la valeur de la tension de commande agissant sur la variation de la commande du plateau dans le circuit (940). Ainsi lors des phases d'accélération ou de démarrage, le courant circulant dans le câble (65) d'alimentation du moteur sera en permanence limité à la valeur maximum fixée par le circuit (965).

Lorsque l'utilisateur relâche la pédale d'accélérateur pour provoquer un ralentissement du véhicule, le fonctionnement de la transmission hydraulique (3,4) va s'inverser et le moteur hydraulique (3) va fonctionner comme une pompe dont l'angle d'inclinaison du plateau sera géré par le circuit hydraulique (59) entre les valeurs limites fixées et en fonction de la pression hydraulique résultant des couples résistants générés par les roues, issus de l'inertie du véhicule. La pompe (4) va fonctionner comme un moteur, dont l'angle du plateau sera géré par le circuit (940). A ce moment-là, la vitesse de rotation de la pompe (4) augmente provoquant une augmentation de vitesse de rotation du moteur électrique qui se met à fonctionner en génératrice de courant. Lorsque la tension délivrée par le moteur électrique fonctionnant en génératrice devient supérieure à la tension de l'accumulateur (61), le moteur électrique fournit un courant qui est utilisé pour recharger l'accumulateur. Lorsque la pédale d'accélérateur est relâchée partiellement, l'interrupteur (63) reste fermé et ce courant de récupération passe directement dans l'accumulateur pour le recharger. Lorsque la pédale d'accélérateur est relâchée totalement, l'interrupteur (63) s'ouvre et le courant de récupération passe par la diode (64). L'interrupteur (63) s'ouvre et le courant de récupération passe par la diode (64). L'interrupteur (63) est constitué par exemple d'un relais de puissance dont la bobine est alimentée soit par l'interrupteur d'actionnement des freins (969), soit par l'interrupteur couplé à la pédale d'accélérateur. Le fait d'actionner le frein ferme l'interrupteur (969) et permet de couper l'alimentation du moteur électrique (60) en ouvant l'interrupteur (63). Dans les deux cas, la détection de l'inversion du sens du signe du courant provoque la commutation de l'inverseur (964). pour mettre en liaison la tension d'alimentation avec la liaison (970) et fixer la référence de courant I₁ par le circuit (967). Tant que le courant de ralentissement mesuré en sortie de l'amplificateur (961) reste inférieur à la référence I₁, le comparateur (963) n'a pas de sortie logique au niveau 1, et dès que le courant devient égal à la référence I₁, le comparateur produit une sortie logique au niveau 1 qui va bloquer l'évolution de la valeur de la tension de commande agissant sur la variation de la commande du plateau.

Lorsque l'utilisateur, après avoir totalement levé le pied de l'accélérateur, appuie sur la pédale de frein, celle-ci provoque la fermeture du contact (969) qui actionne l'inverseur (966) de façon à le faire basculer de la position représentée en pointillés vers la position dans lequel la ligne (970) est en communication avec le circuit (968). Dans ce cas-là, la valeur du courant de récupération pourra augmenter jusqu'à ce qu'elle soit égale à la valeur de référence I₂ augmentant ainsi l'effet de freinage de l'ensemble électro-hydraulique. Lors de la phase de ralentissement ou de freinage, l'angle de variation du plateau va permettre à la pompe (4), fonctionnant en moteur hydraulique, de tourner plus ou moins vite et d'entraîner plus ou moins vite le moteur électrique (60). En fonction de l'angle du plateau et de la vitesse de rotation du moteur électrique (60), l'utilisateur va obtenir un phénomène de freinage et en même temps un courant qui permettra la recharge de l'accumulateur (61).

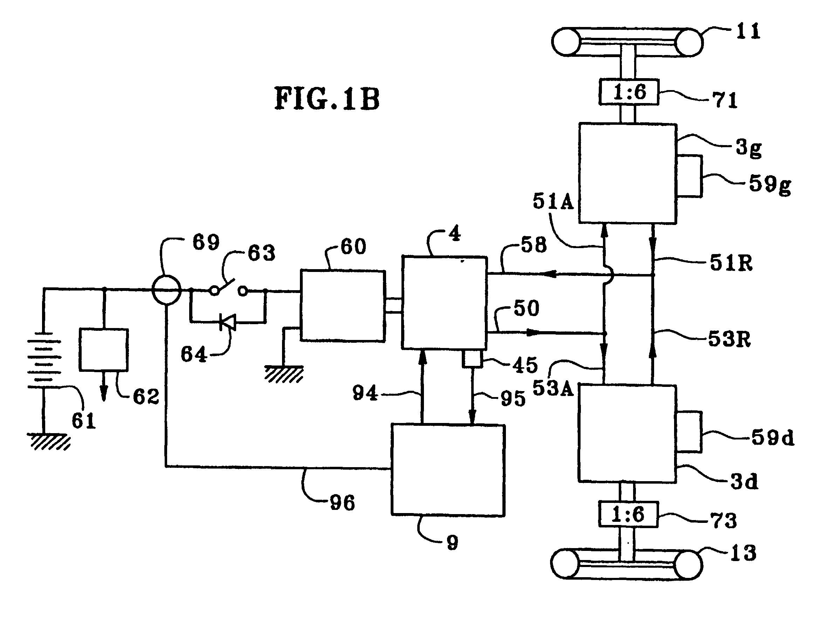

Dans la deuxième variante de réalisation de l'invention de la figure 1B, le moteur électrique (60) entraîne une pompe (4) hydraulique à cylindrée variable, laquelle pompe (4) est reliée par ses canalisation d'aspiration (58) et de refoulement (50) à deux moteurs (3d, 3g) a cylindrée variable commandés comme précédemment par les boîtiers respectifs (59d, 59g). Les moteur de droite (3d) et respectivement de gauche (3g) sont reliés d'une part à la canalisation de refoulement (50) par une canalisation (53A), respectivement (51A) et d'autre part à la canalisation d'aspiration (58) par une canalisation (53R), respectivement (51R). L'arbre de sortie de chaque moteur hydraulique (3d, 3g) est relié à sa roue respective (13, 11) du véhicule par un réducteur respectif (73, 71). Les autres éléments de cette variante sont en tout point identiques à la première variante. Le fonctionnement est également identique à l'exception près que la position neutre de la manette de commande de la transmission du véhicule désaccouple les deux réducteurs (71, 73).

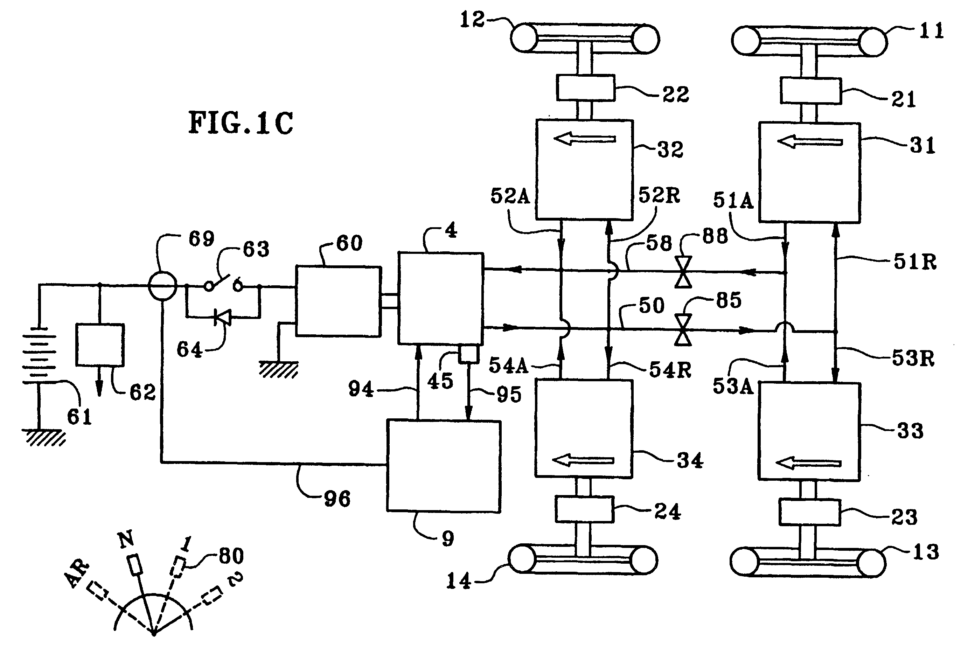

Dans une troisième variante de réalisation de l'invention représentée à la figure 1C, la pompe hydraulique à cylindrée variable (4) alimente quatre moteurs hydrauliques (31 à 34) à cylindrée fixe. L'arbre de sortie de chaque moteur à cylindrée fixe (31 à 34) est relié par un dispositif de désaccouplement mécanique respectif (21 à 24) à la roue respective (11 à 14) associée au moteur pour permettre de désaccoupler chacune des roues lors de certaines opérations, telles que par exemple, les opérations de remorquage, ou changement decylindrée. Les canalisations respectives (51A à 54A) d'arrivée du fluide aux moteurs respectifs (31 à 34) sont reliées à la canalisation de refoulement (50) de la pompe et les canalisations respectives (51R à 54R) de retour du fluide des moteurs respectifs (31 à 34) sont reliées à la canalisation d'aspiration (58) de la pompe. L'alimentation des moteurs du train arrière du véhicule constituée par les moteurs (31) et (33) peut être supprimée par l'intermédiaire des électro-vannes (85), respectivement (88) disposées sur les canalisations d'aspiration (50), respectivement de refoulement (58). Ces moteurs à cylindrée fixe peuvent être, par exemple, des moteurs-roues du type orbital à vitesse lente et couple élevé de la série « OMS » commercialisée par la firme « Danfoss ». Les autres éléments du véhicule sont identiques à ceux de la première variante à la différence près de la manette de commande (80) servant à sélectionner soit la marche arrière (AR), soit le neutre (N), soit la marche avant à fort couple et faible vitesse (1), soit la marche avant à faible couple et grande vitesse (2). Les positions de la manette de sélection sont respectivement : AR, N, 1, 2. La position « AR » actionne le signal appliqué à l'entrée (942) du circuit (940) comme décrit dans les autres variantes. La position « N » agit mécaniquement ou électriquement sur les désaccouplements (21), (22), (23), (24) en fermant les vannes (88), (85), en accouplant la roue (12) avec le moteur (32) et la roue (14) avec le moteur (34) au moyen du dispositif d'accouplement (22) et respectivement (24), en désaccouplant la roue (11) du moteur (31) et la roue (13) du moteur (33) au moyen du dispositif de désaccouplement (21) et respectivement (23). La position « 2 » agit simultanément mécaniquement, ou électriquement, sur les deux vannes (88), (85) et les désaccouplements (21),(22), (23), (24) en ouvrant les vannes (88), (85) et accouplant les quatre roues (12), (14), (11), (13) aux quatre moteurs (32), (34), (31), (33) au moyen des dispositifs respectifs (22), (24), (21) , (23). La manette (80) ne peut être actionnée que lorsque le véhicule est à l'arrêt, état validé par l'information de la fonction « ET » (943). Pour le reste le fonctionnement du circuit (9) est identique à celui décrit en relation avec la variante de réalisation de la figure 1A.

Dans les différentes variantes du véhicule, il va de soit que le véhicule est équipé d'un système de freinage classique venant suppléer ou compléter le freinage de récupération obtenu selon l'invention.

Ainsi les circuits logiques de la figure 2 pourraient être remplacés, en tout ou partie, par un micro-controleur associé à un programme adéquat et aux interfaces nécessaires pour réaliser les mêmes fonctions que le circuit de la figure 2.

## Revendications

1. Véhicule comportant un accumulateur (61) alimentant un moteur électrique (60), le dit moteur électrique (60) fonctionnant dans les phases motrices du véhicule à sa vitesse nominale pour entraîner à vitesse constante une pompe hydraulique à cylindrée variable (4) qui est reliée en circuit fermé par des canalisations à au moins un moteur hydraulique à cylindrée variable (3), dont la cylindrée est contrôlée et commandée hydrauliquement dans une plage limitée ; le dit moteur hydraulique (3) entraînant indirectement une ou plusieurs roues du véhicule (11 à 14) **caractérisé en ce que** la pompe à cylindrée variable est commandée et gérée par un circuit de contrôle, de gestion et de commande (9) de l'inclinaison du plateau de commande de la cylindrée variable de la pompe hydraulique (4), ledit circuit de contrôle de gestion et de commande de l'inclinaison du plateau de commande de la cylindrée variable de la pompe recevant d'une part une information représentative de la pression du fluide entre la pompe et le moteur hydraulique et d'autre part une information représentative soit du courant débité par l'accumulateur à destination du moteur électrique pendant les phases motrices soit du courant généré par le moteur électrique pendant les phases de freinage ou de ralentissement et exploite ces informations pour corriger le signal de commande de l'angle du plateau en fonction de valeur limite de référence pour que la cylindrée varie dans la plage limitée par la cylindrée maximale et une cylindrée minimale non nulle.

2. Véhicule comportant un accumulateur (61) alimentant un moteur électrique (60), ledit moteur électrique fonctionnant dans les phases motrices du véhicule à sa vitesse nominale pour entraîner à vitesse constante une pompe hydraulique à cylindrée variable (4) qui est reliée par des canalisations à un ensemble à cylindrée variable de moteurs hydrauliques (31 à 34) ayant chacun une cylindrée fixe, dont la cylindrée de l'ensemble est modifiée hydrauliquement par des vannes (88, 85) dans une plage limitée, chacun desdits moteurs hydrauliques (31 à 34) entraînant une roue du véhicule (11 à 14) par l'intermédiaire d'un moyen de désaccouplement (21 à 24) permettant le désaccouplement des roues en fonction de la variation de cylindrée de l'ensemble, **caractérisé en ce que** la pompe hydraulique à cylindrée variable (4) est commandée et gérée électroniquement par un circuit de contrôle de gestion et de commande (9) de l'inclinaison du plateau de commande de la cylindrée variable de la pompe hydraulique (4), ledit circuit de contrôle de gestion et de commande de l'inclinaison du plateau de commande de la cylindrée variable de la pompe, recevant d'une part une information représentative de la pression du fluide entre la pompe et les moteur hydrauliques, et d'autre part, une information représentative soit du courant débité par l'accumulateur à destination du moteur électrique pendant les phases motrices soit du courant généré par le moteur électrique pendant les phases de freinage ou de ralentissement et exploitant ces informations pour corriger le signal de commande de l'angle du plateau en fonction de valeurs limites de référence pour que la cylindrée varie dans la plage limitée par la cylindrée maximale de tous les moteurs (31 à 34) de cylindrée fixe et une cylindrée minimale non nulle.

3. Véhicule selon la revendication 1 ou 2, **caractérisé en ce que** les valeurs limites de référence fixées par le circuit de contrôle de gestion et de commande de l'inclinaison du plateau permettent de recharger l'accumulateur pendant les phases de freinage ou de ralentissement du véhicule.

4. Véhicule selon une des revendications 1 à 3 **caractérisé en ce que** le circuit (940) de gestion de la tension de commande du plateau déterminant la variation de cylindrée de la pompe reçoit un signal (949)représentatif de l'enfoncement de la pédale d'accélérateur, un signal (942) représentatif d'un interrupteur indiquant le déplacement en avant ou en arrière de la commande de déplacement avant/arrière du véhicule, un signal généré par un premier circuit (943) et représentatif de la validation de la marche avant/arrière du véhicule, un signal (971) sur l'entrée (972) du circuit (940) représentatif de l'actionnement de la pédale de frein et un signal généré par un second circuit (948) représentatif du maintien de la tension de commande pour le circuit de gestion pour limiter la variation de la tension de commande.

5. Véhicule selon la revendication 4 **caractérisé en ce que** le signal du second circuit (948) est constituée par la sortie d'un circuit logique OU à trois entrées, dont
une première entrée reçoit un signal fonction du signal (947) représentant l'état de charge de la batterie généré par un circuit (62) de contrôle de l'état de charge de la batterie et du signal (946) représentant le sens du courant;.
une seconde entrée reçoit un signal représentatif du courant débité ou reçu par l'accumulateur ;et
la troisième entrée reçoit un signal représentatif de la pression du fluide entre la pompe et le moteur par rapport à une pression de référence maximale.

6. Véhicule selon la revendication 5 **caractérisé en ce que** le signal de pression est délivré par la sortie d'un comparateur (951) recevant sur une de ses entrées le signal du capteur de pression provenant du circuit entre la pompe et le moteur hydraulique, et d'autre part une tension de référence représentative de la pression maximale.

7. Véhicule selon la revendication 5 **caractérisé en ce que** le circuit générant le signal représentatif du courant de charge de l'accumulateur ou du courant débité par l'accumulateur dans le moteur électrique (60) est constitué d'un comparateur (963) recevant sur une de ses entrées le signal de sortie d'un amplificateur (961) de la valeur absolue du courant mesuré par un capteur (96) à boucles de courant, et sur sa seconde entrée un signal représentatif d'un courant de référence I₀, ou I₁, ou I₂ qui dépendra d'une détection de polarité (962) d'une part, et d'autre part d'une détection de la mise en oeuvre des freins.

8. Véhicule selon la revendication 5 **caractérisé en ce que** la détection de polarité est effectuée par un circuit détecteur de polarité qui actionne lors de la détection d'une inversion du courant signalant une charge de l'accumulateur (61), la commutation d'un inverseur (964) permettant de commuter une tension d'alimentation d'une première position alimentant un premier élément (965) générant un premier signal représentatif d'un premier courant maximal I₀ admissible par le moteur électrique, vers une seconde position alimentant un second élément (967) générant un deuxième signal représentatif d'un second courant I₁ correspondant à un courant de ralentissement du véhicule.

9. Véhicule selon la revendication 5 **caractérisé en ce que** l'interrupteur (969) de détection de l'actionnement des freins commande d'une part l'inverseur (966) qui commute une tension d'alimentation sur un troisième circuit (968) délivrant une tension représentative d'un courant I₂ fixe ou variable de freinage du véhicule et d'autre part l'ouverture de l'interrupteur (63) coupant l'alimentation du moteur électrique (60).

10. Véhicule selon une des revendications précédentes **caractérisé en ce que** le moteur électrique est à courant continu et excitation parallèle.

11. Véhicule selon une des revendications précédentes **caractérisé en ce que** le moteur électrique est à courant alternatif de type synchrone ou asynchrone et le circuit d'alimentation électrique provenant de l'accumulateur comprend un onduleur.

## Patentansprüche

1. Fahrzeug mit einem Akkumulator (61), der einen elektrischen Motor (60) speist, wobei der elektrische Motor (60) in den Bewegungsphasen des Fahrzeuges mit seiner Nenndrehzahl arbeitet, um mit konstanter Geschwindigkeit eine hydraulische Pumpe mit variablem Hubraum (4) anzutreiben, die in einem geschlossenen Kreislauf über Rohrleitungen mit mindestens einem hydraulischen Motor mit variablem Hubraum (3) verbunden ist, dessen Hubraum innerhalb eines begrenzten Bereichs hydraulisch geregelt und gesteuert wird; wobei der hydraulische Motor (3) indirekt ein oder mehrere Fahrzeugräder (11 bis 14) antreibt, **dadurch gekennzeichnet, daß** die Pumpe mit variablem Hubraum gesteuert und gelenkt wird durch einen Regel-, Lenk- und Steuerkreis (9) für die Steuerscheibenneigung des variablen Hubraums der hydraulischen Pumpe (4), wobei der Regel-, Lenk- und Steuerkreis der Steuerscheibenneigung des variablen Hubraums der Pumpe einerseits eine Information erhält, die repräsentativ ist für den Flüssigkeitsdruck zwischen der Pumpe und dem hydraulischen Motor, und andererseits eine Information, die repräsentativ ist entweder für den vom Akkumulator zum elektrischen Motor während der Bewegungsphasen gelieferten Strom oder für den vom elektrischen Motor erzeugten Strom während der Brems- oder Verlangsamungsphasen, und diese Informationen benutzt, um das Steuersignal für den Scheibenwinkel in Abhängigkeit vom Referenzgrenzwert zu korrigieren, damit der Hubraum sich in dem durch den maximalen Hubraum und einem minimalen Hubraum ungleich Null begrenzten Bereich ändert.

2. Fahrzeug mit einem Akkumulator (61), der einen elektrischen Motor (60) speist, wobei der elektrische Motor in den Bewegungsphasen des Fahrzeuges mit seiner Nenndrehzahl arbeitet, um mit konstanter Geschwindigkeit eine hydraulische Pumpe mit variablem Hubraum (4) anzutreiben, die über Rohrleitungen mit einer einen variablen Hubraum aufweisenden Gruppe hydraulischer Motoren (31 bis 34) verbunden ist, die jeder jeweils einen festen Hubraum haben, wobei der Hubraum der Gruppe hydraulisch durch Ventile (88, 85) innerhalb eines begrenzten Bereichs geändert wird, wobei jeder der hydraulischen Motoren (31 bis 34) ein Fahrzeugrad (11 bis 14) über ein Mittel zur Abkopplung (21 bis 24), das die Abkopplung der Räder in Abhängigkeit von der Hubraumänderung der Gesamtheit erlaubt, antreibt, **dadurch gekennzeichnet, daß** die hydraulische Pumpe mit variablem Hubraum (4) elektronisch gesteuert und gelenkt wird durch einen Regel-, Lenk- und Steuerkreis (9) für die Steuerscheibenneigung des variablen Hubraums der hydraulischen Pumpe (4), wobei der Regel-, Lenk- und Steuerkreis für die Steuerscheibenneigung des variablen Hubraums der Pumpe einerseits eine Information erhält, die repräsentativ ist für den Flüssigkeitsdruck zwischen der Pumpe und den hydraulischen Motoren und andererseits eine Information, die repräsentativ ist entweder für den vom Akkumulator in Richtung des elektrischen Motors abgegebenen Strom während der Bewegungsphasen oder für den vom elektrischen Motor während der Brems- oder Verlangsamungsphasen erzeugten Strom und diese Informationen benutzt, um das Steuersignal für den Scheibenwinkel in Abhängigkeit der Referenzgrenzwerte zu korrigieren, damit der Hubraum sich in dem durch den maximalen Hubraum aller Motoren (31 bis 34) mit festem Hubraum und einem minimalen Hubraum, der nicht Null ist, begrenzten Bereich ändert.

3. Fahrzeug nach Anspruch 1 oder 2, **dadurch gekennzeichnet, daß** die durch den Regel-, Lenk- und Steuerkreis für die Scheibenneigung festgelegten Referenzgrenzwerte es erlauben, den Akkumulator während der Brems- oder Verlangsamungsphasen des Fahrzeuges aufzuladen.

4. Fahrzeug nach einem der Ansprüche 1 bis 3, **dadurch gekennzeichnet, daß** der Lenkkreis (940) der Scheibensteuerspannung, der die Änderung des Pumpenhubraums bestimmt, folgende Signale empfängt: ein Signal (949), das repräsentativ ist für die Senkung des Fahrpedals, ein Signal (942), das repräsentativ ist für einen Schalter, der die Vorwärts- oder Rückwärtsbewegung des Steuerteils für die Vorwärts/Rückwärtsbewegung des Fahrzeugs anzeigt, ein Signal, das durch einen ersten Schaltkreis (943) erzeugt wird und repräsentativ ist für die Freigabe des Vorwärts-/Rückwärtsgangs des Fahrzeugs, ein Signal (971) am Eingang (972) des Schaltkreises (940), das repräsentativ ist für die Betätigung des Bremspedals, und ein von einem zweiten Schaltkreis (948) erzeugtes Signal, das repräsentativ ist für die Aufrechterhaltung der Steuerspannung für den Lenkkreis, um die Steuerspannungsänderung zu begrenzen.

5. Fahrzeug nach Anspruch 4, **dadurch gekennzeichnet, daß** das Signal des zweiten Schaltkreises (948) von dem Ausgang eines logischen ODER-Schaltkreises mit drei Eingängen gebildet wird, wovon
ein erster Eingang ein Signal empfängt, das abhängig ist von dem Signal (947), das den Ladezustand der Batterie repräsentiert und durch einen Schaltkreis (62) zur Batterieladezustandskontrolle erzeugt wird, und dem Signal (946), das die Stromrichtung repräsentiert;
ein zweiter Eingang ein Signal empfängt, das repräsentativ ist für den vom Akkumulator abgegebenen oder empfangenen Strom; und
der dritte Eingang ein Signal empfängt, das repräsentativ ist für den Flüssigkeitsdruck zwischen der Pumpe und dem Motor im Verhältnis zu einem maximalen Referenzdruck.

6. Fahrzeug nach Anspruch 5, **dadurch gekennzeichnet, daß** das Drucksignal von dem Ausgang eines Komparators (951) geliefert wird, der an einem seiner Eingänge das Signal des Drucksensors empfängt, das vom Schaltkreis zwischen der Pumpe und dem hydraulischen Motor stammt, und andererseits eine Referenzspannung, die repräsentativ ist für den maximalen Druck.

7. Fahrzeug nach Anspruch 5, **dadurch gekennzeichnet, daß** der Schaltkreis, der das Signal erzeugt, das repräsentativ ist für den Ladestrom des Akkumulators oder für den vom Akkumulator an den elektrischen Motor (60) abgegebenen Strom, einen Komparator (963) umfaßt, der an einem seiner Eingänge das Ausgangssignal eines Verstärkers (961) des von einem Stromschleifensensor (96) gemessenen absoluten Stromwerts empfängt, und an seinem zweiten Eingang ein Signal, das repräsentativ ist für einen Referenzstrom I₀ oder I₁ oder I₂, abhängig einerseits von einer Erkennung der Polarität (962) und andererseits einer Erkennung der Bremsenbenutzung.

8. Fahrzeug nach Anspruch 5, **dadurch gekennzeichnet, daß** die Erkennung der Polarität durch einen Polaritätserkennungsschaltkreis erfolgt, der bei Erkennen einer Strominvertierung, die ein Laden des Akkumulators (61) signalisiert, die Umschaltung eines Inverters (964) bewirkt, die es erlaubt eine Versorgungsspannung von einer ersten Position, die ein erstes Element (965) versorgt, das ein erstes Signal erzeugt, das repräsentativ ist für einen ersten maximalen für den elektrischen Motor zulässigen Strom I₀, umzuschalten auf eine zweite Position, die ein zweites Element (967) versorgt, das ein zweites Signal erzeugt, das repräsentativ ist für einen zweiten Strom I₁, der einem Strom der Fahrzeugverlangsamung entspricht.

9. Fahrzeug nach Anspruch 5, **dadurch gekennzeichnet, daß** der Schalter (969) zur Erkennung der Bremsenbenutzung einerseits den Inverter (966) steuert, der eine Versorgungsspannung auf einen dritten Schaltkreis (968) schaltet, der eine Spannung liefert, die repräsentativ ist für einen festen oder variablen Fahrzeugbremsstrom I₂, und andererseits die Öffnung des Schalters (63), womit die Versorgung des elektrischen Motors (60) unterbrochen wird.

10. Fahrzeug nach einem der vorangegangenen Ansprüche, **dadurch gekennzeichnet, daß** der elektrische Motor ein Gleichstrommotor mit paralleler Erregung ist.

11. Fahrzeug nach einem der vorangegangenen Ansprüche, **dadurch gekennzeichnet, daß** der elektrische Motor ein synchroner oder asynchroner Wechselstrommotor ist und der vom Akkumulator ausgehende elektrische Versorgungsstromkreis einen Wechselrichter enthält.

## Claims

1. Vehicle comprising a battery (61) supplying power to an electric motor (60), said electric motor (60) operating in the driving phases of the vehicle at its nominal speed in order to drive at a constant speed a variable-displacement hydraulic pump (4) that is connected in a closed circuit by lines to at least one variable-displacement hydraulic motor (3), the displacement of which is monitored and controlled hydraulically within a limited range; said hydraulic motor (3) indirectly driving one or more wheels of the vehicle (11 to 14) **characterised in that** the variable-displacement pump is controlled and managed by a circuit (9) for monitoring, managing and controlling the tilt of the control plate for the variable displacement of the hydraulic pump (4), said circuit for monitoring, managing and controlling the tilt of the control plate for the variable displacement of the pump receiving on the one hand information representing the pressure of the fluid between the pump and the hydraulic motor and on the other hand information representing either the current drawn by the battery and going to the electric motor during the driving phases or the current generated by the electric motor during the braking or deceleration phases and uses this information in order to correct the control signal for the angle of the plate as a function of a reference limiting value so that the displacement varies within the range limited by the maximum displacement and a non-zero minimum displacement.

2. Vehicle comprising a battery (61) supplying power to an electric motor (60), said electric motor operating in the driving phases of the vehicle at its nominal speed in order to drive at a constant speed a variable-displacement hydraulic pump (4) that is connected by lines to a variable-displacement assembly of hydraulic motors (31 to 34), each having a fixed displacement, in which the displacement of the assembly is modified hydraulically by valves (88, 85) within a limited range, each of said hydraulic motors (31 to 34) driving one wheel of the vehicle (11 to 14) via a disconnection means (21 to 24) allowing the disconnection of the wheels as a function of the variation in displacement of the assembly, **characterised in that** the variable-displacement hydraulic pump (4) is controlled and managed electronically by a circuit (9) for monitoring, managing and controlling the tilt of the control plate for the variable displacement of the hydraulic pump (4), said circuit for monitoring, managing and controlling the tilt of the control plate for the variable displacement of the pump receiving, on the one hand, information representing the pressure of the fluid between the pump and the hydraulic motors and, on the other hand, information representing either the current drawn by the battery and going to the electric motor during the driving phases, or the current generated by the electric motor during the braking or deceleration phases and using this information in order to correct the control signal for the angle of the plate as a function of reference limiting values so that the displacement varies within the range limited by the maximum displacement of all the fixed-displacement motors (31 to 34) and a non-zero minimum displacement.

3. Vehicle according to Claim 1 or 2, **characterised in that** the reference limiting values fixed by the circuit for monitoring, managing and controlling the tilt of the plate make it possible to recharge the battery during the braking or deceleration phases of the vehicle.

4. Vehicle according to one of Claims 1 to 3, **characterised in that** the circuit (940) for managing the control voltage of the plate determining the variation in displacement of the pump receives a signal (949) representing the degree to which the accelerator pedal is depressed, a signal (942) representing a switch indicating the forward or reverse displacement of the forward/reverse displacement control of the vehicle, a signal generated by a first circuit (943) representing the validation of the forward/backward motion of the vehicle, a signal (971) on the input (972) of the circuit (940) representing the actuation of the brake pedal and a signal generated by a second circuit (948) representing the maintenance of the control voltage for the management circuit in order to limit the variation in the control voltage.

5. Vehicle according to Claim 4 **characterised in that** the signal from the second circuit (948) is constituted by the output from a three-input OR logic circuit, in which
a first input receives a signal that is a function of the signal (947) representing the state of charge of the battery generated by a circuit (62) for monitoring the state of charge of the battery and of the signal (946) representing the direction of the current;
a second input receives a signal representing the current drawn or received by the battery; and
the third input receives a signal representing the pressure of the fluid between the pump and the motor relative to a maximum reference pressure.

6. Vehicle according to Claim 5, **characterised in that** the pressure signal is delivered by the output of a comparator (951) receiving at one of its inputs the signal from the pressure sensor originating from the circuit between the pump and the hydraulic motor and, on the other hand, a reference voltage representing the maximum pressure.

7. Vehicle according to Claim 5, **characterised in that** the circuit generating the signal representing the charging current of the battery or the current drawn by the battery in the electric motor (60) is constituted by a comparator (963) receiving at one of its inputs the output signal from an amplifier (961) of the absolute value of the current measured by current loop sensor (96) and, at its second input, a signal representing a reference current I₀ or I₁ or I₂, which will depend on detection of polarity (962) on the one hand and, on the other hand, detection of the operation of the brakes.

8. Vehicle according to Claim 5 **characterised in that** polarity is detected by a polarity detector circuit that, when an inversion notifying charging of the battery (61) is detected, actuates the switching of an inverter (964) making it possible to switch a power supply voltage from a first position supplying power to a first element (965) generating a first signal representing a first maximum current I₀ allowable by the electric motor, to a second position supplying power to a second element (967) generating a second signal representing a second current I₁ corresponding to a vehicle deceleration current.

9. Vehicle according to Claim 5, **characterised in that** brake actuation detection switch (969) controls on the one hand the inverter switch (966), which switches the power supply voltage to a third circuit (968) delivering a voltage representing a fixed or variable vehicle braking current I₂ and on the other hand the opening of the switch (63) cutting off the power supply to the electric motor (60).

10. Vehicle according to one of the preceding claims **characterised in that** the electric motor is of the direct current and parallel excitation type.

11. Vehicle according to one of the preceding claims **characterised in that** the electric motor is of the alternating current and synchronous or asynchronous type and the electric power supply circuit coming from the battery comprises an inverter.
